# EUROPEAN PATENT APPLICATION

(11) **EP 2 466 721 A2**
(43) Date of publication of application: **20.06.2012**
(21) Application number: 11193267.9
(22) Date of filing: 13.12.2011
(51) Int. Cl.: H02K 1/14, H02K 15/02, H02K 15/095

(54) **Motor stators**

(30) Priority: 15.12.2010 JP 2010278957
(71) Applicant: Makita Corporation, Anjo, Aichi 446-8502 (JP)
(72) Inventor: Marukawa, Keiichi, Anjo,, Aichi 446-8502 (JP); Kawai, Koji, Anjo,, Aichi 446-8502 (JP); Fukuhara, Shu, Anjo,, Aichi 446-8502 (JP)
(74) Representative: Kramer - Barske - Schmidtchen

(57) **Abstract**

A stator has a stator core (10) having a plurality of core segments (13L, 13R) each including a magnetic pole tooth (11). Each of the core segments (13L, 13R) has two segment portions (13LU, 13LD; 13RU, 13RD) each including a wiring recess (11b) and a half part of the magnetic pole tooth (11). Wires (24) are wound around the core segments (13L, 13R), so that each of the wires (24) extends through and between the wiring recesses (11b) of the two segment portions (13LU, 13LD; 13RU, 13RD) of each of the core segments (13L, 13R). The two segment portions (13LU, 13LD; 13RU, 13RD) of each of the core segments (13L, 13R) are joined to each other after the wire is wound. The core segments (13L, 13R) are arranged in a substantially annular shape and joined to each other to form the stator core (10) after the two segment portions (13LU, 13LD; 13RU, 13RD) of each of the core segments (13L, 13R) are joined to each other.

## Description

This application claims priority to Japanese patent application serial number 2010-278957, the contents of which are incorporated herein by reference.

The present invention relates to stators for motors, such as those used for driving power tools. The present invention also relates to methods of wounding wires around stator cores of stators.

International Publication No. WO2008/072443 teaches a technique of dividing a stator core having a layered structure into a plurality of core segments having magnetic pole teeth, respectively. A wire is would around the magnetic pole teeth of each core segment that is developed by being bent at a thin hinge portion. After the wiring operation, each core segment is formed into an arc shape by being bent at the thin hinged portion. Thereafter, the wired core segments are joined together to form a circular stator core. By using this technique, it is possible to wind the wire through wiring recesses on opposite sides of each magnetic tooth in the state that the wiring recesses are positioned on a straight line and not in the state that the wiring recesses are positioned on a curved line. In particular in the case of a two-pole stator having wiring recesses curved by a large curvature, it is possible to wind wires through the wiring recesses by a sufficient number of turns and with a high wiring density.

However, with the above wiring technique, the wires are wound in the state that the core segments are developed by being bent at the thin hinge portions, and the core segments are then bent to form arc shapes at the thin hinge portions after the wiring operations. Therefore, two steps including a step of bending at the hinge portion in one direction and a step of bending in an opposite direction are necessary to be performed for each core segment. As a result, the accuracy in shapes of the core segments is not always reproduced when the core segments are formed into a circular shape, and irregularity in positions may occur to the core segments. In some cases, during the step of joining the core segments to each other, opposite end portions of one of the core segments may be offset from opposite end portions of the other of the core segments, causing the core segments to be joined at inappropriate positions. If the hinge portions are formed to have a thinner thickness, it may be possible to adjust the relative position between the core segments when the core segments are formed into arc shapes. However, this may cause degradation in the durability of the hinge portions.

Therefore, there has been a need in the art for a technique that enables core segments to be joined to each other accurately in positions while enabling wires to be wound by a sufficient number of turns and with a high wiring density.

In a first aspect according to the present teachings, a stator includes a stator core having a plurality of core segments. Each of the core segments includes a magnetic pole tooth and two segment portions each including a wiring recess and a half part of the magnetic pole tooth. Wires are wound around the core segments, so that each of the wires extends through and between the wiring recesses of the two segment portions of each of the core segments. The two segment portions of each of the core segments are joined to each other after the wire is wound. The core segments are arranged in a substantially annular shape and joined to each other to form the stator core after the two segment portions of each of the core segments are joined to each other.

In a second aspect according to the present teachings, a method of manufacturing a stator includes the following steps:
providing a stator core having a plurality of core segments each including a magnetic pole tooth, each of the core segments having two segment portions each including a wiring recess and a half part of the magnetic pole tooth;
positioning the two segment portions of each of the core segments such that the wiring recesses are positioned substantially on a same straight line,
winding wires around the core segments, so that each of the wires extends through and between the wiring recesses of the two segment portions of each of the core segments;
joining the two segment portions of each of the core segments to each other; and
arranging the core segments into a substantially annular shape and joining the core segments to each other to form a stator.

With the above first or second aspect of the present invention, the wiring recesses formed on opposite sides of each magnetic pole tooth are positioned substantially on a same straight line during the winding operation. To this end, each of the core segments are divided into two segment portions that are joined to each other after the winding operation. Therefore, unlike the known construction in which the core segments are developed by being bent at the hinge portions and are formed into a circular shape after the winding operations, it is possible to avoid inaccuracy of the circular shape of the stator core. Thus, according to the above first or second aspect, the two segment portions can be joined each other to accurately form an arc shape by adjusting the relative position after the winding operations. Hence, the core segments can be joined to each other to accurately form an annular shape of the stator.

The two segment portions of each of the core segments may be directly joined to each other. In this case, it is possible to simplify the joining operation of the two segment portions and to reduce the number of components and the manufacturing cost.

Alternatively, the two segment portions of each of the core segments may be joined to each other with an intervention of first joint members. In this case, it is possible to further accurately adjust the relative position between the two segment portions when the two segment portions are joined to each other.

The core segments may be directly joined to each other at their opposite ends. In this case, it is possible to simplify the joining operation of the core segments and to reduce the number of components and the manufacturing cost.

Alternatively, the core segments may be joined to each other with an intervention of second joint members between the opposite ends of one of the core segments and the opposite ends of the other of the core segments. In this case, it is possible to further accurately adjust the relative position between the core segments when the core segments are joined to each other.

In another aspect of the present teachings, a winding apparatus used for the above method includes a first jig and a second jig configured to releasably hold the two segment portions therebetween during the winding operation. A space is defined between the first jig and the second jig to allow the wire to extend therethrough for winding the wire through the wiring recesses during the winding step. A block is provided for guiding the wire from a wire source to the two segment portions through the space, so that the wire extends substantially parallel to the longitudinal direction of the space. The block reciprocally moves in a direction perpendicular to the longitudinal direction of the space, so that the wire is wound through the winding recesses at different positions as the block reciprocally moves.

In a further aspect of the present invention, a stator core usable for the above stator and the manufacturing method is provided. The stator core includes a plurality of core segments each having two wiring recesses and a magnetic pole tooth. The core segments can be joined to each other to form the stator core. Each of the core segments is separated into two segment portions each having one of the wiring recesses and a half of the magnetic pole tooth. The two segments portions can be joined to each other to form the core segment.

Additional objects, features, and advantages, of the present invention will be readily understood after reading the following detailed description together with the claims and the accompanying drawings, in which:
FIG 1 is a plan view of a motor stator according to a representative embodiment of the present invention;
FIG 2 is a plan view of a stator core of the stator shown in FIG 1;
FIG 3 show various views of the stator core including a view of core segments joined to each other into an annular shape (upper portion in FIG 3), a view of the core segments separated from each other (middle portion in FIG 3), and a view of the core segments each separated into two segment portions (lower portion in FIG 3);
FIG 4 is a view showing the operation for winding a wire around the two segment portions;
FIG 5 shows various views of the stator core and wires including a view of the state where the wire has been would around the segment portions of each core segment before the segment portions are joined to each other after the winding operations (upper portion in FIG 5), a view of the state where the segment portions of each core segment have been joined to each other (middle portion in FIG 5), and a view of the state (similar to the state shown in FIG 1) where the core segments have been joined to each other (upper portion in FIG 5);
FIG 6 is a plan view of core segments and joint members of a stator according to a second embodiment; and
FIG 7 is a plan view of core segments and joint members of a stator according to a third embodiment.

Each of the additional features and teachings disclosed above and below may be utilized separately or in conjunction with other features and teachings to provide improved motor stators and methods for manufacturing such motor stators. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful examples of the present teachings. Various examples will now be described with reference to the drawings.

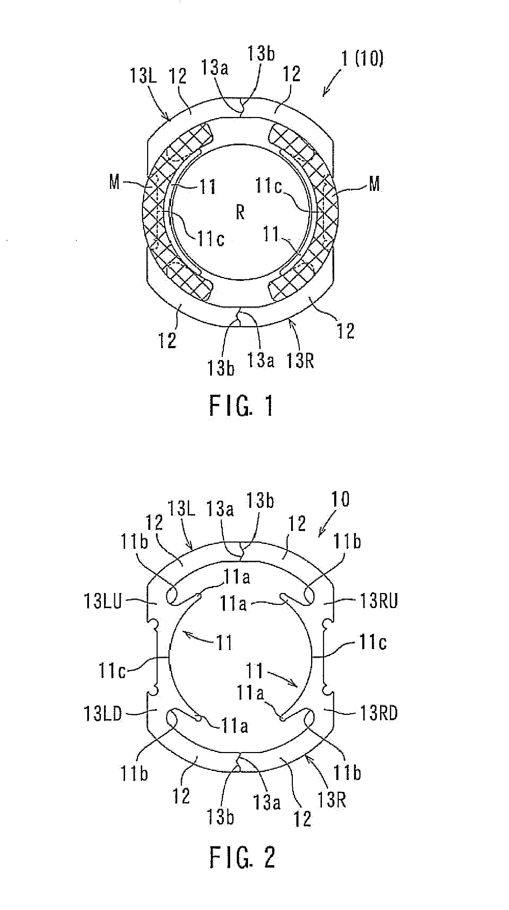

A representative embodiment will now be described with reference to FIGS. 1 to 5. In this embodiment, a two-pole stator having two magnetic pole teeth arranged to be opposed to each other will be described as an example of a motor stator. Referring to FIG 1, a stator 1 of this embodiment is shown in plan view. FIG 2 shows a stator core 10 of the stator 1 before magnet wires 24 (that will be described later) are wound around the stator core 10. The stator core 10 has a substantially annular configuration as viewed in a plan view (i.e., as viewed from a direction of a motor axis). A rotor R may be positioned on the inner circumferential side of the stator core 10 having coils M formed by the magnet wires 24 wound around the stator core 10 as shown in FIG 1. Preferably, the stator core 10 may be formed of a plurality of steel plates that are stacked and integrated together. The stacked steel plates may be formed to have a suitable shape by a punching operation using a punching press machine (not shown). The stator core 10 includes a pair of magnetic pole teeth 11 that are positioned on the inner circumferential side of the stator core 10 so as to be opposed to each other.

As shown in FIG 2 and on the upper portion of FIG 2, the stator core 10 has a pair of left and right core segments 13L and 13R that can be separated from each other. The stator core 10 has a pair of circular arc-shaped portions 12 extending in the circumferential direction between positions of the stator core 10 corresponding to opposite ends of the magnetic pole teeth 11. The core segments 13L and 13R are separated from each other at the central positions of the arc-shaped portions 12.

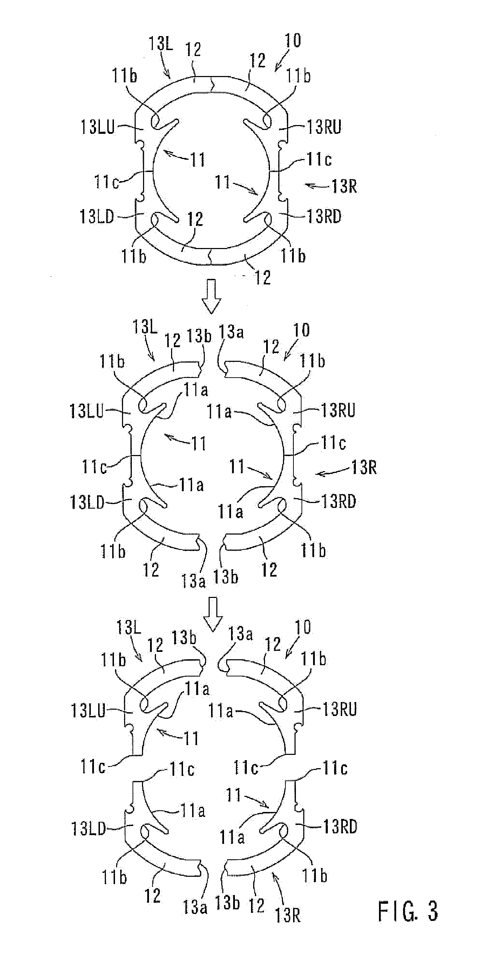

Each of the core segments 13L and 13R has a V-shaped joint recess 13a and an angle-shaped joint projection 13b formed at opposite ends in the circumferential direction. In the state shown in the middle of FIG 3, the joint projections 13b are formed at the upper end of the left side core segment 13L and at the lower end of the right side core segment 13R. On the other hand, the joint recesses 13a are formed at the lower end of the left side core segment 13L and at the upper end of the right side core segment 13R. Therefore, the core segments 13L and 13R can be positioned relative to each other in the diametrical direction (vertical direction as viewed in FIGS. 2 and 3) when the joint projection 13b of the core segment 13L is brought to engage the joint recess 13a of the core segments 13R and the joint projection 13b of the core segment 13R is brought to engage the joint recess 13a of the core segment 13L.

The magnetic pole tooth 11 is positioned at the inner circumference of the central portion in the circumferential direction of each of the core segments 13L and 13R. Arc-shaped wiring recesses 11b are formed on opposite sides of the base portion of the magnetic pole tooth 11. The core segment 13L and the core segment 13R are configured to be symmetrical with respect to a rotation center of the rotor R in the assembled state shown in FIG 1.

As shown in the lower portion of FIG 3, the left core segment 13L is divided into an upper segment portion 13LU and a lower segment portion 13LD at their joint edges 11c (a lower edge of the upper segment portion 13LU and an upper edge of the lower segment portion 13LD) that are positioned centrally with respect to the circumferential direction of corresponding the magnetic pole tooth 11. Similarly, the right core segment 13R is divided into an upper segment portion 13RU and a lower segment portion 13RD having joint edges 11c (a lower edge of the upper segment portion 13RU and an upper edge of the lower segment portion 13RD) that are positioned centrally with respect to the circumferential direction of corresponding the magnetic pole tooth 11.

In this way, the stator core 10 is separated into two core segments 13L and 13R with respect to the left and right direction, and the core segments 13L and 13R are divided further into the segment portions 13LU and 13LD and the segments portions 13RU and 13RD, respectively, at the joint edges 11c. Therefore, the stator core 10 having an annular shape is separated into four segments portions in the circumferential direction. In other words, each of the magnetic pole teeth 11 is divided into upper and lower teeth halves 11a, and one winding recess 11b is positioned for each of the four teeth halves 11a. The stator core 10 is divided into the above four segment portions 13LU, 13LD, 13RU and 13RD at the same time the stator core 10 is formed from the stacked steel plates by the punching operation using the punching press machine.

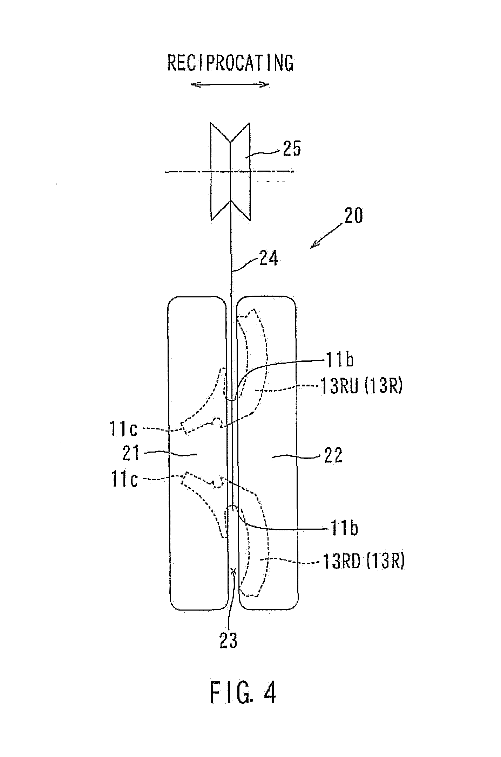

The step of winding the magnetic wire 24 around the core segment 13L is performed independently of the step of winding the magnetic wire 24 around the core segment 13R. FIG. 4 shows a state where the magnetic wire 24 is would around the core segment 13R shown on the right side in FIG. 3 by using a winding apparatus 20. As shown in FIG. 4, the core segment 13R is set on the winding apparatus 20 such that its segment portions 13RU and 13RD are held between jigs 21 and 22. More specifically, the segment portions 13RU and 13RD are held between the jigs 21 and 22 such that the wiring recesses 11b of the segment portions 13RU and 13RD are positioned substantially on a same straight line along a longitudinal direction of a space 23 defined between the jigs 21 and 22. In other words, the space 23 extends through opposite ends of each of the wiring recesses 11b. With this arrangement, the segment portions 13RU and 13RD do not cause interference with the wire 24 during the winding operation.

When in the state shown in FIG 2 or the state shown in the upper portion of FIG 3, each of the wiring recesses 11b positioned on opposite sides of each magnetic pole tooth 11 has a gently curved arc shape about the center of the annular stator core 10 (i.e., the rotational axis of the rotor R shown in FIG 1). More specifically, each of the wiring recesses 11b has a length along a gently curved line and has a closed bottom and an open end on opposite sides.

After the core segment 13R has been set in this way, the magnet wire 24 is wound around the segment portions 13RU and 13RD to extend through their wiring recesses 11b. Because the wiring recesses 11b are positioned substantially on the same straight line along the longitudinal direction of the space 23 defined between the jigs 21 and 22 when in the positions shown in FIG. 4, it is possible to wind the magnet wire 24 over substantially the entire area of each wiring recess 11b from its bottom end to its open end.

The magnetic wire 24 is fed from a wire supply source, such as an unwinder or a wire reel (not shown) to the core segment 13R via a guide block 25 of the winding apparatus 20. The guide block 26 is supported by a support device (not shown) such that the rotational axis of the guide block 26 extends perpendicular to the longitudinal direction of the space 23 (i.e., a direction parallel to the widthwise direction of the space 23). In addition, the guide block 26 is coupled to a reciprocating drive device (not shown), so that the guide block 26 can reciprocate in the direction perpendicular to the longitudinal direction of the space 23 within a range substantially corresponding to the width of the space 23. Therefore, the magnet wire 24 can be wound to extend through the winding recesses 11b while the guide block 26 reciprocates in a direction parallel to the widthwise direction of the space 23. As a result, the magnet wire 24 can be wound to extend through the winding recesses 11b by a sufficient number of turns and with a high density over the entire width of the winding recesses 11b.

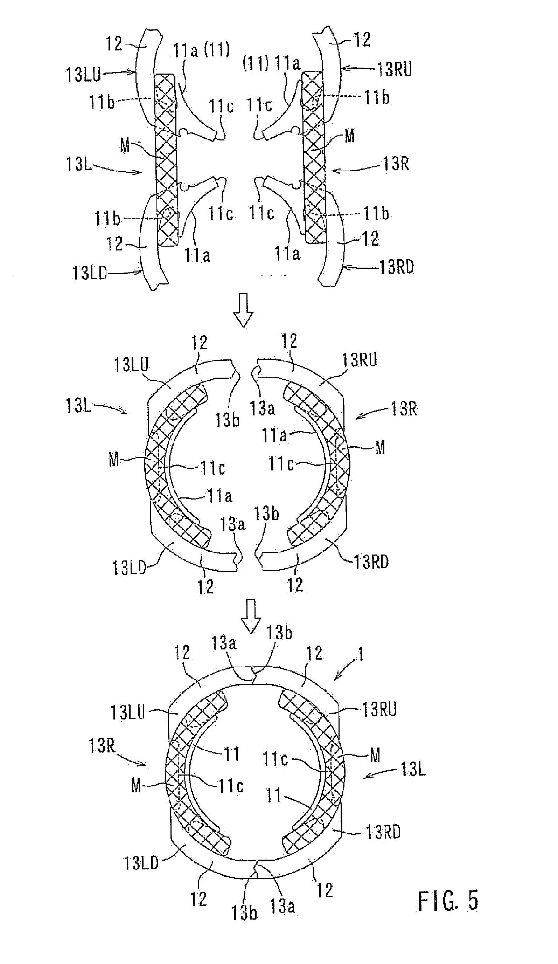

After the magnetic wire 24 has been wound by a predetermined number of turns through the winding recesses 11b, the magnetic wire 24 is cut and the cut end is treated in a known manner. Then, the core segment 13R is removed from between the jigs 21 and 22. The magnetic wire 24 is also would around the core segment 13L in the same manner as the core segment 13R. The core segments 13L and 13R after completion of the wire winding process are shown in the upper portion of FIG. 5. In FIG. 5, the magnet wires 24 wound around the core segments 13L and 13R to form the coils M are shown with hatching. In the state shown in the upper portion of FIG. 5, each of the coils M of the core segments 13L and 13R exhibits a liner bar-like shape in plan view.

Next, as shown in the middle portion of FIG. 5, the segment portions 13LU and 13LD positioned on the upper side and the lower side of the core segment 13L, respectively, are turned in directions such that their joint edges 11c are oriented toward each other, and at the same time, the shape of the coil M is changed from the liner bar-like shape to a substantially semicircular shape in plan view by using a suitable jig (not shown). Similarly, the segment portions 13RU and 13RD positioned on the upper side and the lower side of the core segment 13R, respectively, are turned in directions such that their joint edges 11c are oriented toward each other, and at the same time, the shape of the coil M is changed from the liner bar-like shape to a substantially semicircular shape in plan view by using a suitable jig (not shown) that is the same or similar to that used for the core segment 13L. Thereafter, the joint edges 11c of the segment portions 13LU and 13LD are brought to abut to each other, and the joint edges 11c of the segment portions 13RU and 13RD are brought to abut to each other. Subsequently, by using welding, adhesion or like suitable technique, the abutted joint edges 11c of the segment portions 13LU and 13LD are joined to each other, and the joint edges 11c of the segment portions 13RU and 13RD are joined to each other.

The core segment 13L formed by joining the segment portions 13LU and 13LD and the core segment 13R formed by joining the segment portions 13RU and 13RD as described above are then joined to each other to form the annular stator core 1 as shown in the lower portion of FIG. 5. More specifically, the joint projection 13a formed at one end in the circumferential direction of the core segment 13L is engaged with the joint recess 13b formed at one end in the circumferential direction of the core segment 13R, and the joint projection 13a formed at the other end of the core segment 13R is engaged with the joint recess 13b formed at the other end of the core segment 13L. Thereafter, the circumferential ends of the core segment 13L are joined to the circumferential ends of the core segment 13R at positions where the joint projections 13a are fitted into the joint recesses 13b. In this way, the core segments 13L and 13R are joined together after they are positioned relative to each other in a diametrical direction of the stator core 10 (vertical direction as viewed in FIG 5). As a result, the stator 1 including the stator core 10 and the coils M each formed by the magnet wire 24 wound by a sufficient number of turns and with a high density is manufactured.

According to the stator 1 or a method of winding the magnetic wires 24 around the stator core 10 described above, the annular stator core 10 is divided into two left and right core segments 13L and 13R each having a substantially semicircular configuration. The core segments 13L and 13R are further divided into the segment portions 13LU and 13LD and the segment portions 13RU and 13RD, respectively. The magnetic wire 24 is would around the segment portions 13LU and 13LD of the core segment 13L, and the magnetic wire 24 is also would around the segment portions 13RU and 13RD of the core segment 13R. The winding operation of the magnetic wire 24 for the core segment 13L and the winding operation of the magnetic wire 24 for the core segment 13R are performed independently of each other.

During the winding operation, the segments portions 13LU and 13LD (13RU and 13RD) are set on the jigs 21 and 22 of the winding apparatus 20 such that the wiring recesses 11b are positioned substantially on the same straight line along longitudinal direction of the space 23 defined between the jigs 21 and 22. Therefore, the magnetic wire 24 can be wound to extend through the wiring recesses 11b by a sufficient number of turns and with a high density.

In addition, according to the above embodiment, after the magnetic wire 24 has been wound around the segment portions 13LU and 13LD (13RU and 13RD) through the wiring recesses 11b, the segment portions 13LU and 13LD (13RU and 13RD) are joined together at their joint edges 11c to form the semicircular core segment 13L (13R). Therefore, in comparison with the known technique in which the core segment is developed by being bent at the hinge portion and the core segment is folded into an arc shape after the winding operation of the wire, the segment portions 13LU and 13LD (13RU and 13RD) can be joined together while they are positioned accurately relative to each other, after the winding operation of the magnet wire 24. Hence, the core segment 13L (13R) can be manufactured with high accuracy, and consequently, the stator 1 can be manufactured with high accuracy.

Further, because the joint edges 11c of the segment portions 13LU and 13LD (13RU and 13RD) are directly joined to each other, it is possible to simplify the operation for joining the segment portions together and to reduce the number of necessary parts and the manufacturing cost.

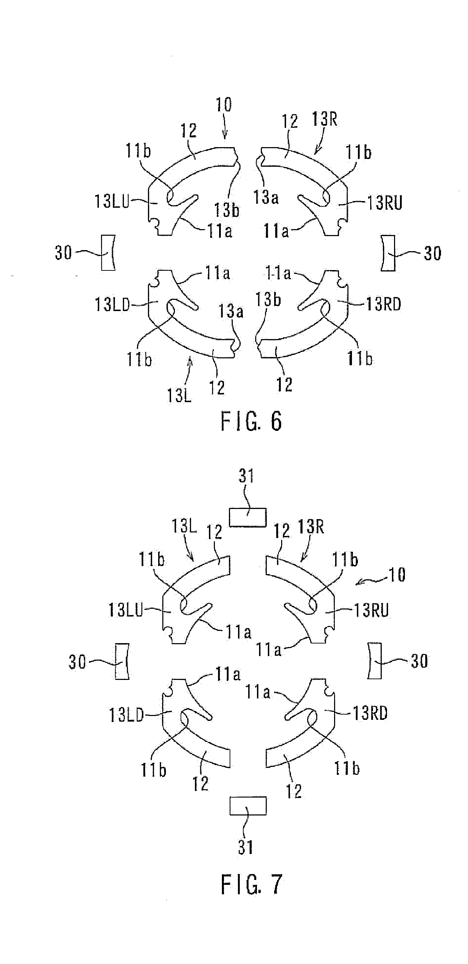

The above embodiment can be modified in various ways. For example, although the joint edges 11c of the segment portions 13LU and 13LD (13RU and 13RD) are directly joined to each other to form the core segment 13L(13R), the joint edges 11c can be joined to each other with an intervention of a joint member 30 as shown in FIG. 6. By using the joint member 30, the relative position between the segment portions 13LU and 13LD (13RU and 13RD) can be easily adjusted after the winding operation. Therefore, the segment portions 13LU and 13LD (13RU and 13RD) can be joined more accurately.

Further, as shown in FIG 7, the core segments 13L and 13R can be joined to each other with an intervention of joint members 31 in addition to the use of the joint members 30 that are interposed between the segment portions 13LU and 13LD and between the segment portions 13RU and 13RD. In this case, the joint projections 13a and the joint recesses 13b can be omitted. By using the joint members 31, it is possible to join the core segments 13L and 13R to each other while the relative position therebetween can be easily adjusted during the joining operation. Therefore, the core segments 13L and 13R can be joined more accurately. In addition, in the case that the core segments 13L and 13R are joined to each other via the joint members 31, the joint members 30 can be omitted. In such a case, the segment portions 13LU and 13LD (13RU and 13RD) are joined to each other directly at their joint edges 11c.

Further, although the above embodiments has been described in connection with the stator 1 that has two magnetic poles given by two magnetic pole teeth 11 and has the stator core 10 divided into four segment portions 13LU, 13LD, 13RU and 13RD, the above teachings can also be also applied to a stator having three or more magnetic poles given by three or more magnetic pole teeth. In the case of a stator having three or more magnetic poles, the stator core may be divided into three or more core segments each having a magnetic pole tooth, and each of the core segments may be divided into two segment portions such that each segment portion has a half of the magnetic pole tooth. During the winding operation, the two segment portions of each core segment may be positioned such that their winding recesses are positioned substantially on a same straight line, so that the wire can be wound around the two segment portions by a sufficient number of turns and with a high density. After the winding operation, the two segment portions are joined to each other to form the core segment. Three or more core segments each formed in this way are joined to each other to form a stator.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A stator (1) comprising:
a stator core (10) having a plurality of core segments (13L, 13R) each including a magnetic pole tooth (11), each of the core segments (13L, 13R) having two segment portions (13LU, 13LD; 13RU, 13RD) each including a wiring recess (11b) and a half of the magnetic pole tooth (11); and
wires (24) wound around the core segments (13L, 13R), so that each of the wires (24) extends through and between the wiring recesses (11b) of the two segment portions (13LU, 13LD; 13RU, 13RD) of each of the core segments (13L, 13R);
wherein the two segment portions (13LU, 13LD; 13RU, 13RD) of each of the core segments (13L, 13R) are adapted to be joined to each other after the wire (24) is wound; and
wherein the core segments (13L, 13R) are arranged in a substantially annular shape and adapted to be joined to each other to form the stator core (10) after the two segment portions (13LU, 13LD; 13RU, 13RD) of each of the core segments (13L, 13R) are joined to each other.

2. The stator (1) as in claim 1, wherein the two segment portions (13LU, 13LD; 13RU, 13RD) of each of the core segments (13L, 13R) are directly joined to each other.

3. The stator (1) as in claim 1, wherein the two segment portions (13LU, 13LD; 13RU, 13RD) of each of the core segments (13L, 13R) are joined to each other with an intervention of first joint members (30).

4. The stator (1) as in any one of claims 1 to 3, wherein each of the core segments (13L, 13R) has opposite ends and the core segments (13L, 13R) are directly joined to each other at their opposite ends.

5. The stator (1) as in any one of claims 1 to 3, wherein each of the core segments (13L, 13R) has opposite ends and the core segments (13L, 13R) are joined to each other with an intervention of second joint members (31) between the opposite ends.

6. A method of manufacturing a stator (1), comprising the steps of:
providing a stator core (10) separated into a plurality of core segments (13L, 13R) each including a magnetic pole tooth (11), each of the core segments (13L, 13R) being separated into two segment portions (13LU, 13LD; 13RU, 13RD) each including a wiring recess (11b) and a half of the magnetic pole tooth (11);
positioning the two segment portions (13LU, 13LD; 13RU, 13RD) of each of the core segments (13L, 13R) such that the wiring recesses (11b) are positioned substantially on a same straight line;
winding wires (24) around the core segments (13L, 13R), so that each of the wires (24) extends through and between the wiring recesses (11b) of the two segment portions (13LU, 13LD; 13RU, 13RD) of each of the core segments (13L, 13R);
joining the two segment portions (13LU, 13LD; 13RU, 13RD) of each of the core segments (13L, 13R) to each other; and
arranging the core segments (13L, 13R) in a substantially annular shape and joining the core segments (13L, 13R) to each other.

7. The method as in claim 6, wherein the two segment portions (13LU, 13LD; 13RU, 13RD) of each of the core segments (13L, 13R) are directly joined to each other.

8. The method as in claim 6, wherein the two segment portions (13LU, 13LD; 13RU, 13RD) of each of the core segments (13L, 13R) are joined to each other with an intervention of first joint members (30).

9. The method as in any one of claims 6 to 8, wherein each of the core segments (13L, 13R) has opposite ends and the core segments (13L, 13R) are directly joined to each other at their opposite ends.

10. The method as in any one of claims 6 to 8, wherein each of the core segments (13L, 13R) has opposite ends and the core segments (13L, 13R) are joined to each other with an intervention of second joint members (31) between the opposite ends.

11. The method as in any one of claims 6 to 10, further comprising the step of changing the orientations of the two segment portions (13LU, 13LD; 13RU, 13RD) after the wire (24) has been wound and before the two segment portions (13LU, 13LD; 13RU, 13RD) are joined to each other.

12. A winding apparatus (20) used for the method as in any one of claims 6 to 11, comprising:
a first jig (21) and a second jig (22) configured to releasably hold the two segment portions (13LU, 13LD; 13RU, 13RD) therebetween during the winding step;
wherein a space (23) is defined between the first jig (21) and the second jig (22) to allow the wire (24) to extend therethrough for winding the wire (24) through the wiring recesses (11b) during the winding step; and
a guide block (25) guiding the wire (24) from a wire source to the two segment portions (13LU, 13LD; 13RU, 13RD) through the space (23), so that the wire (24) extends substantially parallel to the longitudinal direction of the space (23);
wherein the guide block (25) reciprocally moves in a direction perpendicular to the longitudinal direction of the space (23), so that the wire (24) is wound through the wiring recesses (11b) at different positions as the block (25) reciprocally moves.

13. A stator core (10) comprising:
a plurality of core segments (13L, 13R) each having two wiring recesses (11b) and a magnetic pole tooth (11);
wherein the core segments (13L, 13R) can be joined to each other to form the stator core (10),
wherein each of the core segments (13L, 13R) is separated into two segment portions (13LU, 13LD; 13RU, 13RD) each having one of the wiring recesses (11b) and a half of the magnetic pole tooth (11), and
wherein the two segments portions (13LU, 13LD; 13RU, 13RD) can be joined to each other to form the core segment (13L; 13R).
